# EUROPÄISCHE PATENTSCHRIFT

(11) **EP 2 864 142 B1**
(45) Veröffentlichungstag und Bekanntmachung des Hinweises auf die Patenterteilung: **06.04.2016**
(21) Anmeldenummer: 13727519.4
(22) Anmeldetag: 29.05.2013
(51) Int. Cl.: B60K 1/04, H01M 2/10, H01M 10/625, H01M 10/6551, H01M 10/6561, H01M 10/613, B60L 11/18, B60K 1/00

(54) **FAHRZEUG MIT EINER BATTERIEANORDNUNG**
VEHICLE WITH A BATTERY ARRANGEMENT
VÉHICULE AVEC UN AGENCEMENT DE BATTERIE

(30) Priorität: 20.06.2012 DE 102012012294
(43) Veröffentlichungstag der Anmeldung: 29.04.2015
(73) Patentinhaber: Audi AG, 85045 Ingolstadt (DE)
(72) Erfinder: ALLMANN, Christian, 85051 Ingolstadt (DE); SCHÜSSLER, Martin, 85092 Kösching (DE)
(74) Vertreter: Herbst, Matthias Heinz
(86) Internationale Anmeldenummer: PCT/EP2013/001588
(87) Internationale Veröffentlichungsnummer: WO 2013/189565

(56) Entgegenhaltungen:
- EP-A1- 2 273 582
- WO-A1-2011/110898
- DE-A1- 19 829 293

## Beschreibung

Die Erfindung betrifft ein Fahrzeug mit zumindest einer Batterieanordnung, welche wenigstens eine Batterieeinheit und eine Kühleinrichtung zum Abführen von Wärme von der wenigstens einen Batterieeinheit umfasst. Die Kühleinrichtung ist hierbei derart in einem Lastpfad des Fahrzeugs angeordnet, das sie bei einer unfallbedingten Kraftbeaufschlagung des Fahrzeugs deformierbar ist. Die Kühleinrichtung umfasst eine Mehrzahl von in einem Kühlbetrieb der Kühleinrichtung von Kühlluft umströmten Kühlrippen.

Die DE 10 2008 024 291 A1 beschreibt einen Personenkraftwagen mit einem Unterboden, welcher in einem Fahrgastzellenbereich Querträger und Seitenschweller sowie einen Längsträger aufweist. In von diesen Trägern umgebenen Bereichen kann zum Schließen der Karosserie eine Batterie angeordnet sein. Die Batterie übernimmt also die Funktion einer Karosserieschließung und Lastaufnahme. Zur Kühlung kann die Batterie an ihrer äußeren Oberfläche einen Kühlkörper mit Kühlrippen aufweisen.

Die DE 10 2009 006 990 A1 beschreibt ein Kraftfahrzeug mit einem Fahrzeugtunnel in welchem ein Batteriemodul angeordnet ist. Hierbei übernimmt eine Montageplatte die Funktion eines unteren Gehäuseteils des Batteriemoduls, wobei sich die Montageplatte in Querrichtung des Fahrzeugtunnels bis zu inneren Längsträgern erstreckt. Die Montageplatte verhindert so im Falle eines Seitencrashs eine Verringerung des Tunnelquerschnitts und somit auch eine Verformung des Batteriemoduls. Ein mit den beiden Längsträgern verbundenes U-förmiges Tunnelteil vervollständigt den Fahrzeugtunnel. Auf äußeren Flächen der Montageplatte sind Kühlrippen angeordnet.

Die KR 100210949 B1 beschreibt einen Batterietrog für ein Elektrofahrzeug, welcher eine Mehrzahl von Batterieeinheiten aufnimmt. Von jeder Seitenwand des Batterietrogs erstrecken sich Kühlrippen, welche unterschiedliche Längen aufweisen. Jeweils ein Teil der vier Seitenwände des Batterietrogs ist zudem frei von Kühlrippen. Bei einer unfallbedingten Kraftbeaufschlagung brechen die Kühlrippen, da in der Nähe der jeweiligen Seitenwand des Batterietrogs eine Kerbe vorgesehen ist, durch welche eine Dicke der jeweiligen Kühlrippe verringert ist. Diese Deformation der Kühlrippen verhindert eine Verformung der Seitenwand des Batterietrogs.

Die DE 10 2010 033 806 A1 beschreibt ein Batteriepack mit einer Mehrzahl von Batteriemodulen, wobei die einzelnen Batteriemodule wiederum eine Mehrzahl von zylinderförmigen Batteriezellen umfassen. Zwischen zwei benachbarten Batteriemodulen sind Deformationselemente angeordnet. Bei einer unfallbedingten Kraftbeaufschlagung des Batteriepacks verformen sich die Deformationselemente, wobei sich die Batteriemodule relativ zueinander verschieben. Eine Packungseinheit kann hierbei ein Batteriemodul umfassen, an welchem das Deformationselement befestigt ist. Das Deformationselement kann insbesondere als von einer Kühlflüssigkeit oder von Kühlluft durchströmter Kühlkanal ausgebildet sein.

Des Weiteren beschreibt die DE 10 2009 030 016 A1 eine Vorrichtung zur Spannungsversorgung eines Kraftfahrzeugs, bei welcher eine Mehrzahl von Batteriezellen umfassende Batteriemodule in einem Kühlerblock angeordnet sind. Der Kühlerblock umfasst eine von einem Kühlmittel oder Kältemittel durchströmbare Struktur. In dem Kühlerblock ist des Weiteren eine so genannte Crashplatte angeordnet, welche an ihrer Seitenkante Vorsprünge aufweist. Bei einer unfallbedingten Kraftbeaufschlagung der Vorrichtung nimmt die Crashplatte eine auf die Vorrichtung wirkende Kraft auf und leitet diese um die Batteriemodule herum, welche die Batteriezellen enthalten.

Ein Fahrzeug gemäß dem Oberbegriff des Anspruchs 1 ist aus der WO 2011/110898 A1 bekannt.

Als nachteilig ist hierbei der Umstand anzusehen, dass die beschriebenen Kühleinrichtungen vergleichsweise aufwändig sind.

Aufgabe der vorliegenden Erfindung ist es daher, ein Fahrzeug mit einer Batterieanordnung der eingangs genannten Art zu schaffen, bei welcher die Kühleinrichtung besonders einfach ausgebildet ist und ein besonders effizientes Abführen von Wärme ermöglicht.

Diese Aufgabe wird durch ein Fahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei dem erfindungsgemäßen Fahrzeug umfasst die Kühleinrichtung eine Mehrzahl von Kühlrippen, welche in einem Kühlbetrieb der Kühleinrichtung von Kühlluft umströmt sind. Dem liegt die Erkenntnis zugrunde, dass es bei einer luftgekühlten Batterieanordnung sinnvoll ist, die Kühlrippen als Deformationselemente zu nutzen. So können die Kühlrippen durch ihre Deformation im Crashfall Bewegungsenergie abbauen. Durch das Vorsehen der Kühlrippen ist die Kühleinrichtung zudem besonders einfach aufgebaut. Des weiteren ermöglichen die auch an ihren freien Enden von der Kühlluft überströmbaren Kühlrippen ein besonders effizientes Abführen der Wärme von der Batterieeinheit, wenn sie im Kühlbetrieb mit der Kühlluft beaufschlagt werden.

Durch das Nutzen von Kühlluft als Kühlmedium anstelle einer Kühlflüssigkeit brauchen außerdem keine Leitungen vorgesehen zu werden, deren Undichtwerden im Falle eines Unfalls ein Problem darstellen könnte.

Zudem kann darauf verzichtet werden, gesonderte Deformationselemente in die Batterieanordnung einzubringen. Vielmehr werden die ohnehin zum Abführen der Wärme der Batterieeinheit vorzusehenden Kühlrippen zugleich dazu genutzt, bei der unfallbedingten Kraftbeaufschlagung über ihre Deformation Aufprallenergie abzubauen. Die Kühlrippen sind also Teil der Batterieanordnung; sie sind jedoch nicht nur im Hinblick auf die Kühlung ausgelegt, sondern auch im Hinblick darauf, wie weit sie Aufprallenergie in Verformungsenergie umwandeln und so abbauen können.

Bei der Erfindung sind wenigstens zwei Batterieanordnungen derart miteinander gekoppelt, dass sie bei der unfallbedingten Kraftbeaufschlagung einen starren Block bilden und ihre Lage relativ zueinander nicht ändern. In diesem Fall wird die Crashenergie nahezu ausschließlich durch die Deformation der Kühlrippen abgebaut. Es braucht hierbei keine Formgebung der Batterieanordnungen vorgesehen zu werden, welche eine Bewegung derselben relativ zueinander zulässt. So lässt sich das Potenzial der Kühlrippen, Crashenergie abzubauen, besonders weitgehend nutzen.

In einer vorteilhaften Ausgestaltung der Erfindung fällt eine Längserstreckungsrichtung senkrecht zu Wandungen eines Gehäuses der wenigstens einen Batterieeinheit zumindest einer der Kühlrippen mit der Richtung des Lastpfads zusammen. Dann kann diese zumindest eine Kühlrippe besonders gut Aufprallenergie aufnehmen.

Als weiter vorteilhaft hat es sich gezeigt, wenn die wenigstens eine Batterieeinheit in einem Gehäuse angeordnet ist, wobei die Kühlrippen einstückig mit einer Wandung des Gehäuses ausgebildet sind. So ist eine besonders gute Wärmeübertragung von der Wandung des Gehäuses auf die Kühlrippen ermöglicht. Dies ist der besonders effizienten Kühlung der Batterieeinheit dienlich.

Die wenigstens eine Batterieeinheit kann als Batteriezelle ausgebildet sein. Dann sind den einzelnen Batteriezelle die Kühlrippen zugeordnet, welche im Crashfall Aufprallenergie abbauen. Dies ermöglicht eine besonders flexible Platzierung der Batterieanordnungen im Fahrzeug Hinblick auf den zu erwartenden Energieabbau im Crashfall.

Alternativ kann die wenigstens eine Batterieeinheit eine Mehrzahl von Batteriezellen umfassen. Eine solche Batterieeinheit kann auch als Batteriemodul bezeichnet werden, in welchem die einzelnen Batteriezellen aufgenommen sind. Dies ermöglicht es, die Batteriezellen in der Batterieeinheit kompakt anzuordnen und dann die Batterieanordnung auf geeignete Weise im Lastpfad des Fahrzeugs zu platzieren.

Als weiter vorteilhaft hat es sich gezeigt, wenn Eigenschaften der Kühlrippen über die wenigstens eine Batterieanordnung hinweg variieren. Hierbei können insbesondere eine Form der Kühlrippen und/oder eine Wandstärke der Kühlrippen und/oder eine Ausrichtung der Kühlrippen derart ausgebildet sein, dass sie je nach dem Ort ihrer Anordnung im Fahrzeug besonders gut dazu geeignet sind, Hitze oder Wärme abzuführen bzw. Crashenergie abzubauen.

Hierbei kann auch vorgesehen sein, eine Anzahl der Kühlrippen je Flächeneinheit und/oder ein Material der Kühlrippen nicht nur im Hinblick auf die zu erwartende Kühlleistung zu variieren, also beispielsweise den Wärmeübergangskoeffizienten der Kühlrippen zu berücksichtigen, sondern auch den zu erwartenden Energieabbau im Crashfall bei der Auslegung zu berücksichtigen.

Beispielsweise kann in einem Bereich des Fahrzeugs, welcher bei der unfallbedingten Kraftbeaufschlagung einer besonders starken Verformung ausgesetzt ist, also in einer so genannten Crashzone, eine besonders große Dicke der Kühlrippen vorgesehen sein. Diese führt zugleich dazu, dass über diese Kühlrippen besonders viel Wärme abgeführt werden kann. Das Vorsehen von vergleichsweise dicken Kühlrippen kann jedoch auch in einem Bereich des Fahrzeugs vorteilhaft sein, in welchem besonders viel Hitze abgeführt werden soll.

Die wenigstens eine Batterieanordnung kann im Querschnitt rund sein. Dies gilt insbesondere, wenn die Batterieeinheit als runde Einzelzelle ausgebildet ist, es sich also um eine Rundzelle handelt.

Zum Speichern von elektrischer Energie für ein zum Fortbewegen des Fahrzeugs ausgelegtes Antriebsaggregat, kommen jedoch auch prismatische Zellen zum Einsatz, also solche mit einem polygonalen, üblicherweise rechteckigen Querschnitt. Batterieanordnungen mit einer oder mehreren solcher prismatischer Batteriezellen, können ebenso die Kühlrippen aufweisen, um Wärme von der Batterieeinheit abzuführen und im Crashfall Aufprallenergie abzubauen. Im Querschnitt polygonale Batterieanordnungen können insbesondere im Querschnitt sechseckig ausgebildet sein.

Das Vorsehen von im Querschnitt polygonalen Batterieanordnungen ermöglicht es, an den jeweiligen Außenseiten der Batterieanordnung die Kühlrippen gezielt derart vorzusehen, dass die Kühlrippen bei der unfallbedingten Kraftbeaufschlagung deformiert werden und so Aufprallenergie abbauen.

Schließlich hat es sich als vorteilhaft gezeigt, wenn eine Mehrzahl der im Querschnitt polygonal ausgebildeten Batterieanordnungen im wesentlichen lückenlos gepackt in dem Fahrzeug angeordnet ist. Dann beansprucht ein die Batterieanordnungen umfassender Verbund nämlich vergleichsweise wenig Bauraum.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen, in welchen gleiche oder funktionsgleiche Elemente mit identischen Bezugszeichen versehen sind. Dabei zeigen:
- Fig. 1: schematisch eine Batterieanordnung mit einer Batterieeinheit in Form einer runden Batteriezelle, wobei ein zylindrisches Gehäuse der Batteriezelle mit Kühlrippen versehen ist;
- Fig. 2: eine Batterieanordnung in Form eines Batteriemoduls, welches eine Mehrzahl von einzelnen Batteriezellen umfasst, wobei an einem Gehäuse des Batteriemoduls Kühlrippen angeordnet sind;
- Fig. 3: ein Batteriemodul mit einer sechseckigen Gehäuseform, wobei sich die an jeweiligen Seiten eines Gehäuses des Batteriemoduls angeordneten Kühlrippen in ihrer Anzahl je Flächeneinheit und in ihrer Dicke unterscheiden;
- Fig. 4: ein Batteriemodul mit einem Gehäuse gemäß Fig. 3, wobei die Batterieeinheit des Batteriemoduls als einzelne Batteriezelle ausgebildet ist;
- Fig. 5: das Batteriemodul gemäß Fig. 3 mit Rundzellen in dem sechseckigen Gehäuse;
- Fig. 6: ausschnittsweise die Batterieanordnung gemäß Fig. 2, wobei eine die Kühlrippen umfassende Gehäusewand zusätzlich perspektivisch gezeigt ist;
- Fig. 7: ausschnittsweise eine Batterieanordnung mit einer im Querschnitt halbrunden Gehäusewand, welche in unterschiedliche Richtungen weisende Kühlrippen aufweist;
- Fig. 8: die Gehäusewand gemäß Fig. 7 in einer Seitenansicht;
- Fig. 9: eine im Querschnitt halbrunde Gehäusewand mit Kühlrippen in einer Perspektivansicht;
- Fig. 10: einen Verbund von Batterieanordnungen mit Batteriezellen, welche als Rundzellen ausgebildet sind, wobei Wände der Gehäuse der jeweiligen Batterieanordnungen bereichsweise mit den Kühlrippen versehen sind;
- Fig. 11: einen weiteren Verbund von sechseckigen Batteriemodulen, welche gemäß Fig. 4 ausgebildet sind; und
- Fig. 12: einen weiteren Verbund von Batteriemodulen, welche gemäß Fig. 2 ausgebildet sind;

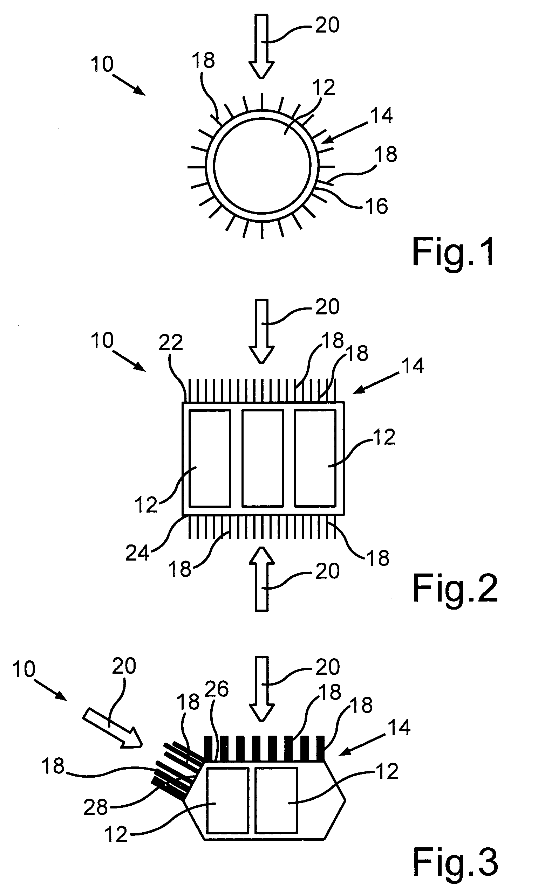

Fig. 1 zeigt eine Batterieanordnung 10, welche als Batterieeinheit eine einzelne Batteriezelle 12 umfasst. Eine solche Batteriezelle 12 kann beispielsweise als Lithium-Ionen-Batteriezelle ausgebildet sein, welche für einen elektrischen Antriebsmotor eines Fahrzeugs elektrische Energie bereitstellt. Die Batteriezelle 12 ist von einem Gehäuse 14 umschlossen, welches so wie die Batteriezelle 12 im Querschnitt rund ausgebildet ist. Einstückig mit einer Wandung 16 des Gehäuses 14 sind eine Vielzahl von Kühlrippen 18 ausgebildet, welche außenumfangsseitig umlaufend in radialer Richtung von der Wandung 16 abstehen.

Das Gehäuse 14 mit den Kühlrippen 18 dient als Kühleinrichtung für die Batteriezelle 12. Diese Kühleinrichtung ist derart in einem Lastpfad des Fahrzeugs angeordnet, dass sich die Kühlrippen 18 bei einer unfallbedingten Kraftbeaufschlagung des Fahrzeugs deformieren. Der Lastpfad ist in Fig. 1 durch einen Pfeil 20 veranschaulicht.

Es werden also bei der Batterieanordnung 10 gemäß Fig. 1 die Kühlrippen 18 gezielt als Deformationselemente genutzt, welche nicht nur für die Luftkühlung der Batteriezelle 12 sorgen, sondern auch für das Abbauen von Aufprallenergie bei einem Unfall des Fahrzeugs. Im Kühlbetrieb sind die Kühlrippen 18 von Kühlluft umströmt, wobei dies durch den Fahrtwind bewirkt sein kann. Zusätzlich oder alternativ kann ein Gebläse vorgesehen sein, um die Kühlrippen 18 mit der Kühlluft zu beaufschlagen.

Während bei der Batterieanordnung 10 gemäß Fig. 1 die Kühlrippen 18 um die als kreiszylindrischer Zylindermantel ausgebildete Wandung 16 umlaufend angeordnet sind, ist bei der in Fig. 2 gezeigten Batterieanordnung 10 das Gehäuse 14 im Querschnitt rechteckig, und nicht alle Außenseiten des Gehäuses weisen Kühlrippen 18 auf. Des Weiteren ist hier die Batterieeinheit als Batteriemodul ausgebildet, welche eine Mehrzahl von einzelnen Batteriezellen 12 umfasst, wobei vorliegend lediglich schematisch und beispielhaft drei Batteriezellen 12 in dem Gehäuse 14 angeordnet gezeigt sind.

Die Kühlrippen 18 sind an jeweiligen stirnseitigen Wandungen 22, 24 des Gehäuses 14 angeordnet. Die jeweilige Längserstreckungsrichtung der Kühlrippen 18 fällt hierbei mit der Richtung eines Lastpfads im Fahrzeug zusammen, welcher durch die Pfeile 20 angegeben ist. Auch bei dieser Batterieanordnung 10 sind die Kühlrippen 18 einstückig mit den Wandungen 22, 24 ausgebildet.

Bei dem Batteriemodul gemäß Fig. 2 sind auch die innerhalb des im Querschnitt rechteckigen Gehäuses 14 angeordneten Batteriezellen 12 im Querschnitt rechteckig, es handelt sich also um so genannte prismatische Batteriezellen 12. Diese werden auch als Flachzellen bezeichnet.

Bei der in Fig. 3 gezeigten Batterieanordnung 10 ist das Gehäuse 14 im Querschnitt sechseckig ausgebildet, wobei eine obere oder stirnseitige Wandung 26 eine größere Länge aufweist als eine an diese seitlich anschließende weitere Wandung 28. Die einstückig mit der oberen Wandung 26 ausgebildeten Kühlrippen 18 weisen jeweils gleiche Wandstärken auf, und ihre Anzahl pro Flächeneinheit ist ebenfalls im Bereich der Wandung 26 einheitlich.

Demgegenüber sind mit der weiteren Wandung 28 Kühlrippen 18 einstückig ausgebildet, deren Dicke, Anzahl pro Flächeneinheit und Länge über die Batterieanordnung 10 hinweg variiert. Hierbei sind die vorstehend beschriebenen Eigenschaften der Kühlrippen 18 sowohl im Hinblick auf die zu erwartende Kühlleistung festgelegt als auch im Hinblick auf den zu erwartenden Energieabbau im Crashfall. Die dickeren Kühlrippen 18 können nämlich mehr Crashenergie abbauen und zugleich mehr Hitze abführen.

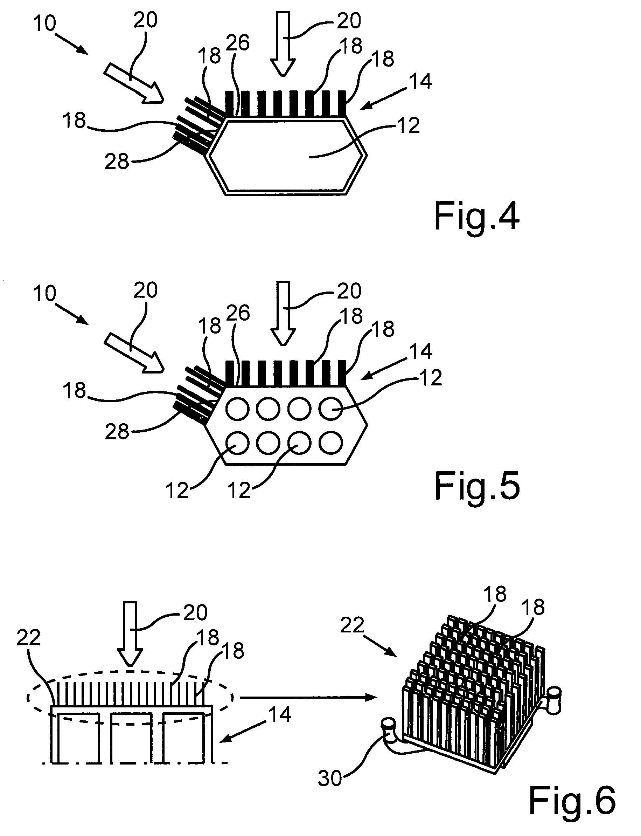

Bei der in Fig. 3 gezeigten Batterieanordnung 10 umschließt das Gehäuse 14 eine Mehrzahl von einzelnen Batteriezellen 12. Bei der in Fig. 4 gezeigten Batterieanordnung 10 ist das Gehäuse 14 so wie in Fig. 3 gezeigt ausgebildet, jedoch befindet sich in diesem lediglich eine einzelne im Querschnitt ebenfalls hexagonale Batteriezelle 12. Auch hier sind lediglich an zwei der Wandungen 26, 28 des Gehäuses 14 die Kühlrippen 18 schematisch gezeigt, jedoch können auch die übrigen Wandungen des Gehäuses 14 mit insbesondere hinsichtlich ihrer Anzahl, Form, Materialauswahl und dergleichen auf den jeweiligen Lastpfad abgestimmten Kühlerrippen 18 versehen sein.

Auch bei der in Fig. 5 gezeigten Batterieanordnung 10 ist das Gehäuse 14 so wie in Fig. 3 gezeigt ausgebildet. Jedoch sind in dem Gehäuse 14 eine Mehrzahl von beispielsweise als Rundzellen ausgebildeten Batteriezellen 12 angeordnet.

In Fig. 6 ist die obere stirnseitige Wandung 22 des Gehäuses 14 der Batterieanordnung 10 gemäß Fig. 2 vergrößert gezeigt, wobei diese stirnseitige Wandung 22 zusätzlich in einer Perspektivansicht dargestellt ist. Insbesondere aus dieser Perspektivansicht geht hervor, dass die einzelnen Kühlrippen 18 nicht nur als Wände, sondern auch als Stifte oder Zinken ausgebildet sein können. Die stirnseitige Wandung 22 kann mit den übrigen Wandungen des Gehäuses 14 über Befestigungselemente wie vorliegend beispielhaft gezeigte Schrauben 30 verbunden sein. Die Verbindung kann jedoch durch Verschweißen und/oder Verkleben und/oder über einen Formschluss erfolgen.

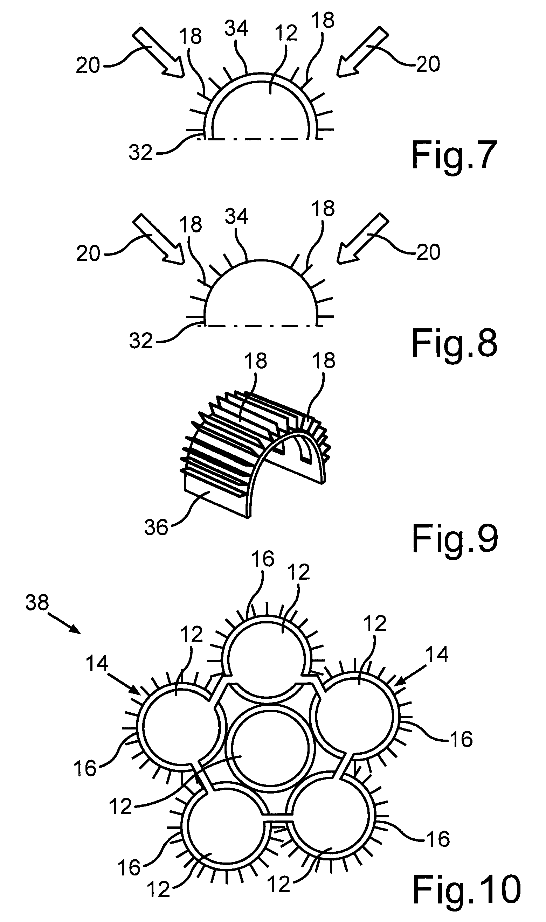

In Fig. 7 ist ausschnittsweise eine als Rundzelle ausgebildete Batteriezelle 12 gezeigt, welche in einem Gehäuse mit einer im Querschnitt halbkreisförmigen Wandung 32 angeordnet ist. Hierbei ist ein Bereich 34 der Wandung 32 nicht mit Kühlrippen 18 versehen, da in diesem Bereich 34 nicht mit einer Kraftbeaufschlagung im Falle eines Unfalls des Fahrzeugs zu rechnen ist. Die einstückig mit den übrigen Bereichen der Wandung 32 ausgebildeten Kühlrippen 18 befinden sich hingegen im Bereich jeweiliger Lastpfade.

Fig. 8 zeigt die Wandung 32 ohne die Batteriezelle 12. In Fig. 9 ist eine weitere, im Querschnitt halbkreisförmige Wandung 36 für eine Rundzelle oder ein rundes Batteriemodul gezeigt, wobei hier die einzelnen Kühlrippen 18 als in Umfangsrichtung gleichmäßig voneinander beabstandete Wände ausgebildet sind, welche radial aus der Wandung 36 hervortreten.

Wie aus den Figuren 1 bis 9 ersichtlich ist, können die Kühlrippen 18 für Batteriezellen 12 oder für mehrere Batteriezellen 12 aufweisende Batteriemodule jeglicher Geometrie Verwendung finden.

Bei einem in Fig. 10 gezeigten Verbund 38 von Batterieanordnungen 10 sind die einzelnen, mit dem jeweiligen Gehäuse 14 versehenen Batteriezellen 12 als Rundzellen ausgebildet. In dem Verbund 38 sind die Wandungen 16 der Gehäuse 14 benachbarter Batteriezellen 12 miteinander in Anlage. Dadurch bilden diese Batterieanordnungen 10 bei einer unfallbedingten Kraftbeaufschlagung einen im Wesentlichen starren Block.

Lediglich die Wandungen 16 der Gehäuse 14, welche in dem Verbund 38 Außenseiten desselben bilden, sind hierbei mit den Kühlrippen 18 versehen. So kann über diese Kühlrippen 18 gut Wärme abgeführt werden, wenn sie von Kühlluft überströmt werden. Zugleich kann im Falle einer unfallbedingten Kraftbeaufschlagung durch die Verformung der Kühlrippen 18 Crashenergie abgebaut werden. Hierbei ändern die einzelnen Batterieanordnungen 10 ihre Lage relativ zueinander im Wesentlichen nicht, sie werden also allenfalls geringfügig relativ zueinander innerhalb des Verbunds 38 verschoben.

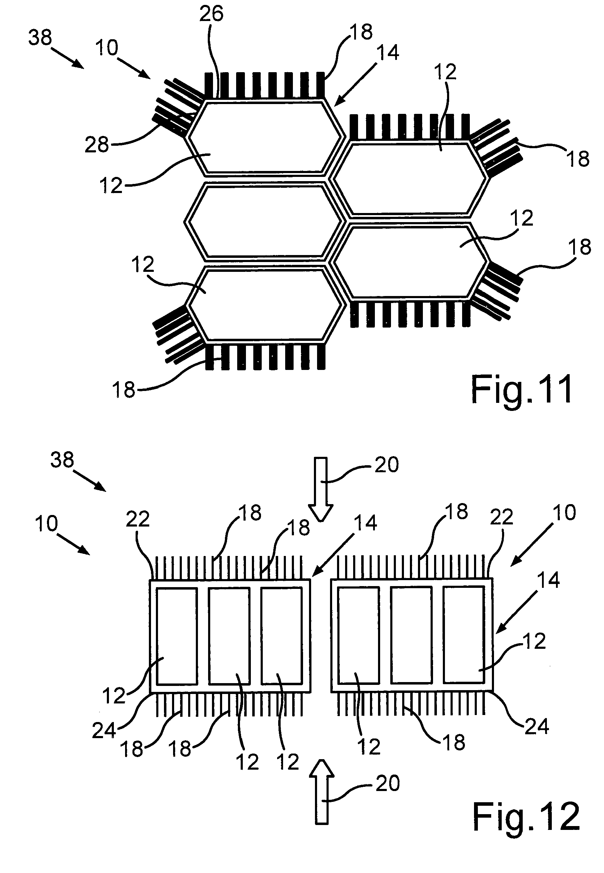

Auch bei dem in Fig. 11 gezeigten Verbund 38 an Batterieanordnungen 10 liegen die Gehäuse 14 der einzelnen Batteriezellen 12 aneinander an. In dem Verbund 38 verschieben sich die einzelnen Batterieanordnungen 10 bei der unfallbedingten Kraftbeaufschlagung daher ebenfalls nicht relativ zueinander. Auch hier sind lediglich an denjenigen Wandungen 26, 28 der Gehäuse 14 Kühlrippen 18 angeordnet, welche Außenseiten des Verbunds 38 bilden.

Die Gehäuse 14 sind hierbei - so wie in Fig. 3 bis 5 gezeigt - im Querschnitt sechseckig ausgebildet, wobei die Gehäuse 14 (wie in Fig. 11 beispielhaft gezeigt) einzelne Batteriezellen 12 umschließen können oder eine Mehrzahl von Batteriezellen. In dem Verbund 38 sind die einzelnen Batterieanordnungen 10 im Wesentlichen lückenlos gepackt angeordnet, so dass sie im Fahrzeug besonders platzsparend unterzubringen sind.

Bei dem in Fig. 12 gezeigten Verbund 38 sind zwei im Querschnitt rechteckige Batterieanordnungen 10 nebeneinander angeordnet, wobei die einzelnen Batterieanordnungen 10 der in Fig. 2 gezeigten Batterieanordnung 10 entsprechen. Es sind in diesem Verbund 38 lediglich die Wandungen 22, 24, welche die Stirnseiten der einzelnen Batterieanordnungen 10 bilden, mit den Kühlrippen 18 versehen. Eine Ausrichtung der Kühlrippen 18 fällt hierbei mit der Richtung des durch die Pfeile 20 angegebenen Lastpfads im Fahrzeug zusammen.

## Patentansprüche

1. Fahrzeug mit zumindest einer Batterieanordnung (10), welche wenigstens eine Batterieeinheit (12) und eine Kühleinrichtung zum Abführen von Wärme von der wenigstens einen Batterieeinheit (12) umfasst, wobei die Kühleinrichtung derart in einem Lastpfad (20) des Fahrzeugs angeordnet ist, dass sie bei einer unfallbedingten Kraftbeaufschlagung des Fahrzeugs deformierbar ist,
wobei die Kühleinrichtung eine Mehrzahl von in einem Kühlbetrieb der Kühleinrichtung von Kühlluft umströmten Kühlrippen (18) umfasst, **dadurch gekennzeichnet, dass**
wenigstens zwei Batterieanordnungen (10) derart miteinander gekoppelt sind, dass sie bei der unfallbedingten Kraftbeaufschlagung einen starren Block bilden und ihre Lage relativ zueinander nicht ändern.

2. Fahrzeug nach Anspruch 1,
**dadurch gekennzeichnet, dass**
eine Längserstreckungsrichtung senkrecht zu Wandungen (22, 24, 26, 28) eines Gehäuses (14) der wenigstens einen Batterieeinheit (12) zumindest einer der Kühlrippen (18) mit der Richtung des Lastpfads (20) zusammenfällt.

3. Fahrzeug nach Anspruch 1 oder 2,
**dadurch gekennzeichnet, dass**
die wenigstens eine Batterieeinheit (12) in einem Gehäuse (14) angeordnet ist, wobei die Kühlrippen (18) einstückig mit einer Wandung (16, 22, 24, 26, 28, 32, 36) des Gehäuses (14) ausgebildet sind.

4. Fahrzeug nach einem der Ansprüche 1 bis 3,
**dadurch gekennzeichnet, dass**
die wenigstens eine Batterieeinheit als Batteriezelle (12) ausgebildet ist oder eine Mehrzahl von Batteriezellen (12) umfasst.

5. Fahrzeug nach einem der Ansprüche 1 bis 4,
**dadurch gekennzeichnet, dass**
- eine Form der Kühlrippen (18) und/oder
- eine Anzahl der Kühlrippen (18) je Flächeneinheit und/oder
- eine Wandstärke der Kühlrippen (18) und/oder
- eine Ausrichtung der Kühlrippen (18) und/oder
- ein Material der Kühlrippen (18)
über die wenigstens eine Batterieanordnung (10) hinweg variiert.

6. Fahrzeug nach einem der Ansprüche 1 bis 5,
**dadurch gekennzeichnet, dass**
die wenigstens eine Batterieanordnung (10) im Querschnitt rund oder polygonal, insbesondere rechteckig oder sechseckig, ausgebildet ist.

7. Fahrzeug nach Anspruch 6,
**dadurch gekennzeichnet, dass**
eine Mehrzahl der im Querschnitt polygonal, insbesondere rechteckig oder sechseckig, ausgebildeten Batterieanordnungen (10) im Wesentlichen lückenlos gepackt in dem Fahrzeug angeordnet ist.

## Claims

1. Vehicle having at least one battery arrangement (10) which comprises at least one battery unit (12) and a cooling device for dissipating heat from the at least one battery unit (12), the cooling device being arranged in a load path (20) of the vehicle so as to be deformable when the vehicle is subjected to a force caused by an accident, said cooling device comprising a plurality of cooling ribs (18) around which cooling air flows when the cooling device is in cooling operation,
**characterised in that** at least two battery arrangements (10) are coupled to one another such that, when subjected to the force caused by the accident, they form a rigid block and do not change their position relative to one another.

2. Vehicle according to claim 1,
**characterised in that** a longitudinal direction of extent of at least one of the cooling ribs (18), extending perpendicular to walls (22, 24, 26, 28) of a housing (14) of the at least one battery unit (12), coincides with the direction of the load path (20).

3. Vehicle according to claim 1 or 2,
**characterised in that** the at least one battery unit (12) is arranged in a housing (14), the cooling ribs (18) being formed in one piece with a wall (16, 22, 24, 26, 28, 32, 36) of the housing (14).

4. Vehicle according to one of claims 1 to 3,
**characterised in that** the at least one battery unit is embodied as a battery cell (12) or comprises a plurality of battery cells (12).

5. Vehicle according to one of claims 1 to 4,
**characterised in that**
- a shape of the cooling ribs (18) and/or
- a number of the cooling ribs (18) per unit of area and/or
- a wall thickness of the cooling ribs (18) and/or
- an alignment of the cooling ribs (18) and/or
- a material of the cooling ribs (18)
varies over the at least one battery arrangement (10).

6. Vehicle according to one of claims 1 to 5,
**characterised in that**
the at least one battery arrangement (10) is round or polygonal, more particularly rectangular or hexagonal, in cross-section.

7. Vehicle according to claim 6,
**characterised in that**
a plurality of the battery arrangements (10) which are polygonal, more particularly rectangular or hexagonal, in cross-section are arranged in the vehicle in a packed formation, with substantially no gaps.

## Revendications

1. Véhicule avec au moins un agencement de batterie (10), qui comprend au moins une unité de batterie (12) et un dispositif de refroidissement pour évacuer de la chaleur de l'au moins une unité de batterie (12), le dispositif de refroidissement étant agencé de telle sorte dans un flux de contraintes (20) du véhicule qu'il est déformable lorsqu'une force est exercée sur le véhicule lors d'un accident,
le dispositif de refroidissement comprend une multiplicité d'ailettes de refroidissement (18) enveloppées d'un flux d'air de refroidissement pendant un fonctionnement en mode de refroidissement du dispositif de refroidissement,
**caractérisé en ce qu'**au moins deux agencements de batterie (10) sont couplés l'un à l'autre de telle sorte que, lorsqu'une force est exercée lors d'un accident, ils forment un bloc rigide et ne changent pas de position l'un par rapport à l'autre.

2. Véhicule selon la revendication 1, **caractérisé en ce qu'**une direction d'extension longitudinale, perpendiculairement à des parois (22, 24, 26, 28) d'un caisson (14) de l'au moins une unité de batterie (12), d'au moins l'une des ailettes de refroidissement (18) coïncide avec la direction du flux de contraintes (20).

3. Véhicule selon la revendication 1 ou 2, **caractérisé en ce que** l'au moins une unité de batterie (12) est agencée dans un caisson (14), les ailettes de refroidissement (18) étant conçues d'un seul tenant avec une paroi (16, 22, 24, 26, 28, 32, 36) du caisson (14).

4. Véhicule selon l'une des revendications 1 à 3, **caractérisé en ce que** l'au moins une unité de batterie est conçue comme une cellule de batterie (12) ou comprend une multiplicité de cellules de batterie (12).

5. Véhicule selon l'une des revendications 1 à 4, **caractérisé en ce que**
- la forme des ailettes de refroidissement (18) et/ou
- le nombre des ailettes de refroidissement (18) par unité de surface et/ou
- l'épaisseur de paroi des ailettes de refroidissement (18) et/ou
- l'orientation des ailettes de refroidissement (18) et/ou
- la matière des ailettes de refroidissement (18) sont variables sur l'au moins un agencement de batterie (10).

6. Véhicule selon l'une des revendications 1 à 5, **caractérisé en ce que** l'au moins un agencement de batterie (10) est conçu avec une section transversale ronde ou polygonale, notamment rectangulaire ou hexagonale.

7. Véhicule selon la revendication 6, **caractérisé en ce qu'**une multiplicité d'agencements de batterie (10), conçus avec une section transversale ronde ou polygonale, notamment rectangulaire ou hexagonale, est agencée sous forme de paquet globalement sans vide dans le véhicule.
